# EUROPÄISCHE PATENTSCHRIFT

(11) **EP 0 722 354 B1**
(45) Veröffentlichungstag und Bekanntmachung des Hinweises auf die Patenterteilung: **10.09.1997**
(21) Anmeldenummer: 94928759.3
(22) Anmeldetag: 10.10.1994
(51) Int. Cl.: B01D 5/00, E03B 3/28

(54) **VERFAHREN UND VORRICHTUNG ZUR GEWINNUNG VON WASSER**
WATER EXTRACTION PROCESS AND DEVICE
PROCEDE ET DISPOSITIF D'EXTRACTION D'EAU

(30) Priorität: 09.10.1993 DE 4334457
(43) Veröffentlichungstag der Anmeldung: 24.07.1996
(73) Patentinhaber: Markus, Wolfgang, D-47259 Duisburg (DE); Braun, Michael, 47647 Kerken (DE)
(72) Erfinder: Markus, Wolfgang, D-47259 Duisburg (DE); Braun, Michael, 47647 Kerken (DE)
(74) Vertreter: Viering, Jentschura & Partner
(86) Internationale Anmeldenummer: DE9401186
(87) Internationale Veröffentlichungsnummer: WO9510342

(56) Entgegenhaltungen:
- DE-A- 3 830 647
- DE-A- 3 936 977
- DE-A- 4 132 916
- US-A- 2 944 404
- US-A- 3 040 538
- US-A- 3 441 449

## Beschreibung

Die Erfindung betrifft ein Verfahren und eine Vorrichtung zur Gewinnung von Wasser durch Kondensation von Luftfeuchtigkeit aus der Umgebungsluft.

Beispielsweise in wasserarmen Gebieten Südeuropas oder in anderen Gebieten der Welt ist das Problem vorhanden, daß aufgrund der Wasserarmut nur sehr beschränktes Pflanzenwachstum möglich ist und die Landschaft versteppt. Um einer solchen Versteppung entgegenzuwirken, sind Verfahren und Vorrichtungen zum Gewinnen von Wasser durch Kondensation von Luftfeuchtigkeit aus der Umgebungsluft vorgeschlagen worden. Bei herkömmlichen Wassergewinnungselementen wird einem Kühlelement Energie zugeführt, wodurch dieses Kühlelement Kondensationsflächen zum Auskondensieren von Luftfeuchtigkeit kühlt, während eine andere Fläche die von der Kühlfläche abgezogene Wärme an die Umgebung abgibt. Die so erzeugte und an die Umgebung abgegebene Wärme wurde bislang jedoch nicht zum teilweisen Wiedergewinnen von für die Kühlung mittels des Kühlelements erforderlicher Energie genutzt. Vielmehr wurde im Gegenteil die Wärme bei vielen Konstruktionen unter zusätzlichem Energieaufwand, beispielsweise mittels Ventilatoren, in die Umgebung abgeleitet.

Durch diese ungenutzte Ableitung der Wärmeenergie verringerte sich nach dem Stand der Technik der Wirkungsgrad, was bedeutete, daß trotz eines relativ hohen Energieaufwandes nur eine kleine Menge an Wasser gewonnen werden konnte.

Ein weiteres Problem bei herkömmlichen Vorrichtungen zum Gewinnen von Wasser ergab sich dadurch, daß kein zufriedenstellender natürlicher Luftzug zum Zuführen von Frischluft gewährleistet wurde, aus welcher die Luftfeuchtigkeit nachfolgend durch Kondensation zu entziehen ist.

Im Stand der Technik sind verschiedenartige Vorrichtungen zur Kondensation der in der Luft enthaltenen Feuchtigkeit beschrieben.

Zum Beispiel wird in der US 2,944,404 eine thermoelektrische Entfeuchtungsanlage offenbart, bei der ein Luftstrom zunächst über die kalte Seite eines Peltierelementes, wobei es zur Kondensation der in der Luft enthaltenen Feuchtigkeit kommen soll, und dann über die warme Seite eines Peltierelementes geleitet wird. Über die zuerst erfolgende Abkühlung und die sich daran anschließende Aufwärmung der Luft soll ein Konvektionsstrom erzeugt werden, der bewirken soll, daß die Luft ohne Verwendung eines Ventilators durch die Entfeuchtungsanlage strömt.

Ferner wird in der US 3,040,538 eine thermoelektrische Klimaanlage beschrieben, bei der die in einem Luftstrom enthaltene Energie auf einen zweiten Luftstrom übertragen werden soll, wobei jeweils die voneinander getrennten Luftströme über Ventilatoren o.ä. erzeugt und durch die Klimaanlage geleitet werden.

Weiterhin offenbart die DE 38 30 647 A1 ein System zur Wassergewinnung aus natürlicher Luftfeuchte unter Verwendung von Peltierelementen, wobei die feuchte Luft zunächst an der kalten Seite eines Peltierelementes und anschließend an der warmen Seite eines Peltiertelementes vorbeigeleitet wird. Zur Unterstützung der natürlichen Konvektion sollen bei diesem System zusätzlich Ventilatoren, Gebläse o.ä. eingesetzt werden.

Des weiteren wird in der DE 39 36 977 A1 ein Kühlgerät zur Entziehung von Feuchtigkeit beschrieben, wobei ein Luftstrom zunächst über die warme Seite und anschließend über die kalte Seite eines Peltierelementes geleitet wird. Bedingt durch das Temperaturgefälle soll ein Konvektionsstrom erzeugt werden, so daß kein Ventilator notwendig sein soll, um die Luft durch das Kühlgerät strömen zu lassen.

Schließlich ist aus der DE 41 32 916 A1 eine Einrichtung zur Gewinnung von Trinkwasser aus Aufwind-Kraftwerken bekannt, wobei unter Zuhilfenahme von einem Gegenstromwärmeaustauscher sowie von Sonnenkollektoren bei gleichzeitiger Ausnutzung des Joule-Thompson-Effektes aus der feuchten Luft Wasser gewonnen werden soll.

Der Erfindung liegt die Aufgabe zugrunde, ein Verfahren und eine Vorrichtung zur Gewinnung von Wasser durch Kondensieren von Luftfeuchtigkeit aus der Umgebungsluft zu schaffen, wobei ein hoher Wirkungsgrad erzielt wird und ohne Zusatzaufwand ein natürlicher Zug zum Zuführen von Frischluft gewährleistet ist.

Dies wird gemäß dem erfindungsgemäßen Verfahren dadurch erreicht, daß eine zum Abteilen eines Kaltluftraumes von einem Warmluftraum vorgesehene wärmeisolierende Trennwand aufgrund von Energiezufuhr von außen auf der einen Seite gekühlt und auf der anderen Seite erwärmt wird, wobei die Warmseite und die Kaltseite der Trennwand prozeßtechnisch nach Art einer Wärmepumpe oder eines Peltierelementes miteinander verbunden sind, ein Luftstrom auf die wärmeisolierende Trennwand zugeführt und in einen Warmluftstrom und einen Kaltluftstrom aufgeteilt wird, wodurch auf der erwärmten Wandseite ein natürlicher Luftzug aufgrund von Konvektion entsteht, der kaminzugartig kanalisiert wird und zur teilweisen Energierückgewinnung genutzt wird, während auf der gekühlten Seite durch Kondensation von Luftfeuchtigkeit Wasser gewonnen wird, und Warm- und Kaltluftstrom nach Passieren der Trennwand zusammengeführt werden.

Die erfindungsgemäße Vorrichtung, mit welcher das erfindungsgemäße Verfahren durchgeführt werden kann, ist derart ausgebildet, daß wenigstens eine Trennwand aus wärmeisolierendem Material zum Abteilen eines Kaltluftraums von einem Warmluftraum vorgesehen ist, diese Trennwand in einen Kamin mündet, und die Trennwand auf der einen Seite mit Heizeinrichtungen und auf der anderen Seite mit Kühleinrichtungen versehen ist, wobei die Warmseite und die Kaltseite der Trennwand prozeßtechnisch nach Art einer Wärmepumpe oder eines Peltierelementes miteinander verbunden sind und wobei die Trennwand so positioniert und ausgerichtet ist, daß ein auf die wärmeisolierende Trennwand zugeführter Luftstrom in einen Warmluftstrom und einen Kaltluftstrom aufgeteilt wird und Warm- und Kaltluftstrom nach Passieren der Trennwand zusammengeführt werden, wodurch auf der Seite der Heizeinrichtungen ein natürlicher Luftzug aufgrund von Konvektion entsteht, welcher sich in den Kamin fortsetzt, wodurch der Vorrichtung Umgebungsluft zugeführt wird und in dem Luftzug Turbinen und Generatoren angeordnet sind, mittels welcher aus der Luftströmung Energie gewonnen wird.

Mit Hilfe dieses Verfahrens und dieser Vorrichtung wird damit die erwärmte Seite gezielt genutzt, um Frischluft in die Vorrichtung zur Gewinnung von Wasser hineinzuleiten. Darüber hinaus wird verwirklicht, daß die Warmluft auf natürlichem Wege, also ohne die Hilfe zusätzlicher Ventilatoren, weggeleitet wird. Als weiterer wesentlicher Vorteil wird darüber hinaus noch verwirklicht, daß ein Teil der Energie, welche auf der Warmluftseite der Trennwand freigesetzt wird, mit Hilfe von Generatoren zurückgewonnen wird, welche in dem natürlichen Luftzug angeordnet sind. Dadurch kann der Wirkungsgrad erhöht werden, d.h. mit einer relativ geringen Energiezufuhr kann eine hohe Menge an Wasser kondensiert werden.

Vorteilhaft kann dabei neben dem natürlichen Zug aufgrund von Konvektion natürlicher Wind zum Zuführen von Umgebungsluft und zum Gewinnen von Energie genutzt wird.

Vorteilhaft wird für das Wärmen der einen Seite der Trennwand und das Kühlen der anderen Seite der Trennwand Solarenergie und/oder Windenergie genutzt, die ihrerseits in elektrische Energie umgewandelt wird. Es ist jedoch auch möglich, einen Anschluß an das allgemeine Stromnetz vorzusehen, um ein Kühlen bzw. Erwärmen der jeweiligen Trennwandseiten zu verwirklichen. Auch kann eine Zwischenspeicherung der Solarenergie oder Windenergie mit Hilfe eines Akkumulators vorgenommen werden, um die Kondensation zum geeigneten Zeitpunkt vorzunehmen, beispielsweise nachts anstatt tagsüber, wobei nachts die Neigung zur Taubildung, also zur Kondensation, ohnehin aufgrund der wegen fehlender Sonneneinstrahlung erfolgenden Abkühlung der Warmluft vorliegt.

Besonders vorteilhaft werden die Heizeinrichtungen und Kühleinrichtungen gleichermaßen durch Peltier-Elemente ausgebildet, die in wärmedämmende Kunststoff-Doppelstegplatten eingebettet sind, wobei die kühlende Peltier-Element-Seite auf der kühlenden Trennwandseite aus der Kunststoff-Doppelstegplatte herausragt und die wärmende Peltier-Element-Seite auf der wärmenden Trennwandseite aus der Kunststoff-Doppelstegplatte herausragt. Diese Peltier-Elemente haben den Vorteil, daß sie sehr einfach gestaltet sind und zuverlässig arbeiten und darüber hinaus eine sehr geringe Baugröße haben, so daß sie sich ohne Probleme in eine Trennwand wie beispielsweise eine Kunststoff-Doppelstegplatte integrieren lassen. Grundsätzlich kann jedoch zum Verwirklichen der Erfindung eine Kombination aus Heiz- und Kühleinrichtung auf beliebige Weise verwirklicht werden, beispielsweise mittels eines Wärmepumpenprozesses mit Hilfe eines Kompressors wie bei Kühlschränken.

Gemäß einer anderen vorteilhaften Weiterbildung der Erfindung sind zwei Trennwände vorgesehen, welche jeweils eine Lufteintrittsöffnung in den Warmluftraum und eine Lufteintrittsöffnung in einen Kaltluftraum auf einer Öffnungsseite teilweise umsäumen und die Trennwände an ihren den Lufteintrittsöffnungen abgewandten Seiten in einen Kamin münden, in dem Turbinen und Generatoren zur Energiegewinnung angeordnet sind. Grundsätzlich kann jedoch jede Art von Generatoren verwendet werden, welche die Wärme aus dem Warmluftraum und/oder die dadurch hervorgerufene kinetische Energie des aufgrund von Konvektion entstandenen Luftstroms zurückgewinnen. Hinsichtlich des Luftstroms ist die Kanalisierung desselben mit Hilfe des Kamins besonders vorteilhaft, so daß der Luftstrom aufgrund des vorteilhaft sich nach oben verjüngenden Kamins beschleunigt wird und so eine ausreichend hohe Geschwindigkeit erhält, um Generatoren anzutreiben.

Vorteilhaft sind die Trennwände nach Art von flexiblen Trennwandzungen ausgebildet und verstellbar, so daß die Größenverhältnisse der Größe der Lufteintrittsöffnung in den Kaltluftraum zu der Größe der Lufteintrittsöffnung in den Warmluftraum geändert werden können. Dadurch können die Verhältnisse für die Kondensation optimal eingestellt werden und überdies kann natürlicher, in der Umgebung herrschender Wind optimal ausgenutzt und in die erfindungsgemäße Vorrichtung hereingeleitet werden, während beispielsweise auf der Windschattenseite die zwecks Kondensation von Flüssigkeit zu kühlende Luft in den Kaltluftraum eindringt. Der Kaltluftzug kann beispielsweise dadurch vorteilhaft erreicht werden, daß von der Warmluft ein beschränkter Betrag an Kaltluft durch den gebildeten leichten Unterdruck an der Eintrittsstelle des Kaltluftstroms in den Kamin mitgezogen wird. Darüber hinaus kann die zwecks Kondensation zu kühlende Frischluft auch durch natürlichen Wind in die erfindungsgemäße Vorrichtung hereingeleitet werden.

Gemäß einer vorteilhaften Weiterbildung der Erfindung können auch an den Einmündungsstellen der Trennwände in den Kamin Turbinen und Generatoren zur Energiegewinnung angeordnet sein, wobei die Turbinen bei Zuführung von Energie für einen besseren Luftzug auch als Ventilatoren betrieben werden können. Diese Ausführungsform gewährleistet den Vorteil, daß je nach Umgebungsbedingungen entweder zusätzlich Energie zurückgewonnen werden kann, oder aber unter Energiezufuhr ein optimaler Luftstrom eingestellt werden kann. Anstatt der als Turbinen oder als Pumpen betreibbaren Einrichtungen können jedoch grundsätzlich auch entsprechende Ventile vorgesehen sein, um den Luftstrom wie gewünscht zu steuern.

Vorteilhaft wird die zum Kondensieren von Flüssigkeit erforderliche Energie so gewonnen, daß Solarzellen und/oder Windräder vorgesehen sind, um die elektrische Energie zum Betreiben der Peltier-Elemente zu gewinnen.

Gemäß einer besonders bevorzugten Ausführungsform ist die erfindungsgemäße Vorrichtung so gestaltet, daß um den Kamin herum ein mit Schüttgut, beispielsweise Erde, gefüllter Hohlraum ausgebildet ist, wobei sich das Schüttgut als Nährboden für Pflanzen eignet. Damit kann diese Vorrichtung auch als Wandmodul gestaltet sein, welches begrünt werden kann, wobei das für das Pflanzenwachstum erforderliche Wasser von der als Wandmodul ausgebildeten erfindungsgemäßen Vorrichtung direkt gewonnen wird, womit ein Gießen von Außen nicht erforderlich ist.

Zum Auffangen des gewonnenen Wassers können unterhalb der Trennwände das gewonnene Kondensationswasser auffangende Auffangbehälter angeordnet sein.

Die Erfindung wird nachfolgend anhand eines bevorzugten Ausführungsbeispiels unter Bezugnahme auf die Zeichnung erläutert. In der Zeichnung zeigen:

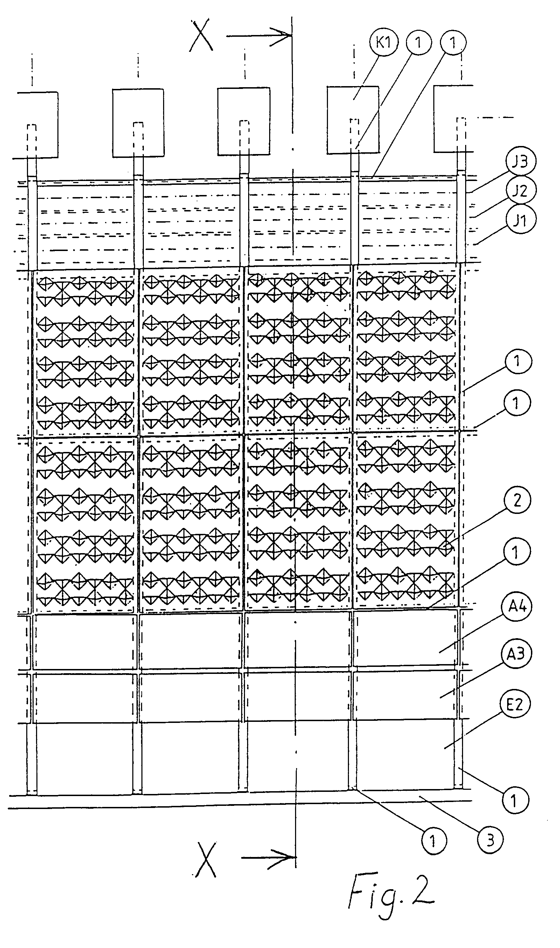

Figur 1 einen in Figur 2 mit X-X bezeichneten Schnitt; und
Figur 2 eine in Figur 1 mit Y bezeichnete Seitenansicht.

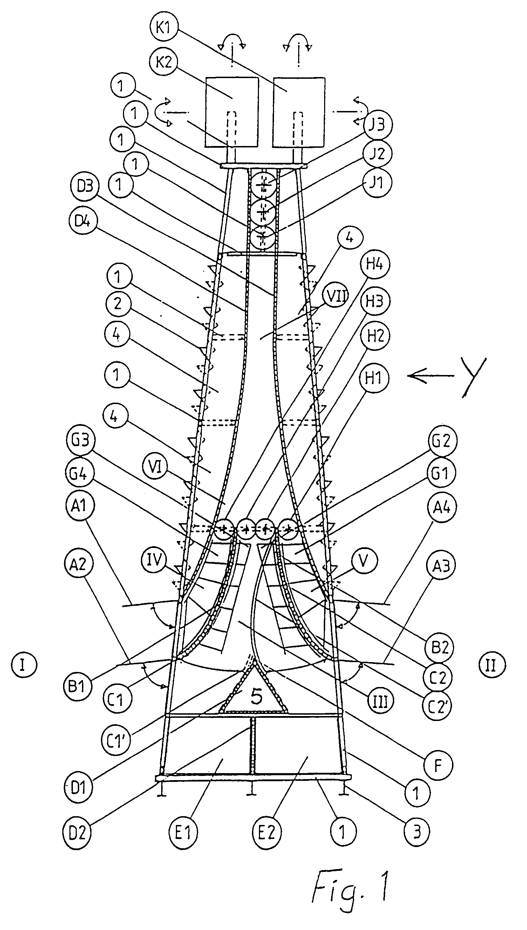

Wie Figur 1 zeigt, weist die Vorrichtung zum Gewinnen von Wasser ein Gehäuse auf, welches gemäß diesem Ausführungsbeispiel aus Stahlblechprofilen (1) und Stahlblechwinkeln (1) als Tragkonstruktion ausgebildet ist. Von dieser Tragkonstruktion werden Wandbekleidungselemente 2 getragen, welche begrünbar sind und aus wiederverwerteten Kunststoffen hergestellt sind.

Im unteren Bereich der Vorrichtung ist eine Stahlträgerunterkonstruktion (3) zum standsicheren und horizontal ausgerichteten Einbau der Vorrichtung vorgesehen. Weiter ist ein sich nach oben verjüngender Kamin VII vorgesehen, welcher in der Mitte der Stahlträgerkonstruktion senkrecht ausgerichtet verläuft. Um den Kamin VII ist zwischen den Wandbekleidungselementen 2 und dem Kamin VII ein Hohlraum ausgebildet, welcher mit einer Schüttung 4 aus Humus, Torf und Kompost zur Herstellung einer Begrünung mittels Pflanzen aufgefüllt werden kann.

Im unteren Bereich der Vorrichtung sind die Trennwände C1 und C2 vorgesehen, welche die Form von Luftraumbegrenzungszungen aus wärmedämmenden Kunststoff-Doppelstegplatten aufweisen und verstellbar sind, indem diese zu einer Dreieckskonstruktion 5 hin bzw. von dieser weg bewegt werden können, wie durch die Bezugszeichen C1', C2' demonstriert ist, welche eine veränderte Stellung der Trennwände C1 und C2 demonstrieren. Mit den Bezugszeichen D1, D2, D3, D4, sind jeweils wärmedämmende Doppelstegplatten bezeichnet, aus denen auch die wärmedämmende Dreieckskonstruktion ausgebildet ist.

Regelbare Lufteintrittsklappen A1, A2, A3, A4 sind zum Hereinlassen von Luft in den zwischen der Doppelstegplatte D4 und der Trennwand C1 ausgebildeten Warmluftraum IV, den zwischen der Doppelstegplatte D3 und der Trennwand C2 ausgebildeten Warmluftraum V, sowie dem zwischen den Trennwänden C1 und C2 ausgebildeten Kaltluftraum III vorgesehen. Die vorgenannten Warm- und Kaltlufträume münden in einen Gemischraum VI, nachdem die jeweilige Luft die als Turbine oder Ventilator betreibbaren Einrichtungen H1, H2, H3 und H4 passiert hat.

Die Trennwände C1, C2 sind mit Peltier-Elementen B1, B2 bestückt, deren kühlende Seite aus der jeweiligen der Trennwände C1, C2 zu dem Kaltluftraum III hin herausragt, während deren warme Seiten in den Warmluftraum IV, V hineinragen.

Das an der kühlen Seite der Trennwand kondensierende Wasser wird in beispielsweise wärmegedämmten Wasserauffangbehältern (E1, E2) aufgefangen, welche einen regelbaren Abfluß und eine Füllstandskontrolle aufweisen. Das Wasser kann mit einer nicht dargestellten Pumpe in die Schüttung 4 geleitet werden. Je nach Richtung, aus die Luftströmung auf das erfindungsgemäße Element trifft, kann das bereits gewonnene Wasser aus dem einen Auffangbehälter in den anderen, der Windseite abgewandten Auffangbehälter, beispielsweise durch eine nicht dargestellte Pumpe, umgefüllt werden.

Mit den Trennwänden C1 bzw. C2 sind Kupferrohr-Leichtkonstruktionen G1, G2, G3, G4 verbunden, welche in wärmeleitendem Kontakt mit den Peltier-Elementen verbunden sind, um eine optimale Wärmeleitung zum Verwirklichen der Kühlung und der Konvektion zu gewährleisten, wozu ein zusätzliches Umweben mit Kupferdrahtgeflecht möglich ist.

An den Einmündungsstellen der Warmlufträume IV und V und des Kaltluftraums III in den Gemischraum VI sind als Turbinen und als Ventilatoren betreibbare Einrichtungen H1, H2, H3, H4 vorgesehen. Mit Hilfe dieser Einrichtungen kann ein Teil der für die Peltier-Elemente benötigen Energie zurückgewonnen werden, wenn diese als Turbinen bzw. Generatoren betrieben werden, oder es läßt sich der Luftstrom gezielt steuern, wenn diese als Ventilatoren betrieben werden.

Im oberen Bereich des Kamins sind darüber hinaus mit Generatoren gekuppelte Turbinen J1, J2, J3 vorgesehen, mittels welchen ein Teil der für die Peltier-Elemente benötigten Energie zurückgewonnen werden kann, wozu der sich ausgehend von den Warmlufträumen IV, V strömende Warmluftstrom, welcher sich durch den Kamin VII fortsetzt, genutzt wird.

Die insgesamt für die Vorrichtung benötigte Energie wird zumindest teilweise mit Hilfe von Solarenergieeinrichtungen K1, K2, gewonnen, welche in zwei Achsen steuerbar sind. Diese Solarenergievorrichtungen weisen eine Regelungsvorrichtung auf und sind mit einem Energiespeicher wie einem Akkumulator verbunden.

Beim Betrieb der Vorrichtung kann durch Schwenken der Luftklappen A1 bis A4 und der Trennwände C1 und C2 der Eintritt der Luft gesteuert werden, beispielsweise in Abhängigkeit von einem vorhandenen Umgebungswind. In einer Maximalstellung kann der Lufteintritt, beispielsweise von dem Luftraum II her, in den Kaltluftraum III von einer Seite der Vorrichtung her vollständig gesperrt werden, indem die Trennwand C2 in ihrer Trennwandstellung C2' gegen eine Dichtung F zum Anliegen kommt, welche an dem dreieckförmigen Element 5 ausgebildet ist. Zu kühlende Luft kann dann nur noch von der anderen Seite, d.h. gemäß diesem Beispiels von dem Luftraum I her, in die Vorrichtung eindringen. Bezweckt werden kann damit beispielsweise in Abhängigkeit von der Windrichtung eine bessere Energieausnutzung, wozu die Einrichtung H1 beispielsweise als Turbine verwendet wird.

Von dem Warmluftstrom aus den Warmlufträumen IV und V wird ein kleinerer Teil der Luft aus dem Kaltluftraum III an der Verbindungsstelle mit dem Gemischraum VI nach Art einer Wasserstrahlpumpe mitgezogen, wodurch unabhängig von der Windrichtung auch ein geeigneter Zustrom von Frischluft gewährleistet ist, aus welcher das Wasser zu kondensieren ist.

## Patentansprüche

1. Verfahren zur Gewinnung von Wasser durch Kondensation von Luftfeuchtigkeit aus der Umgebungsluft, dadurch gekennzeichnet, daß eine zum Abteilen eines Kaltluftraumes von einem Warmluftraum vorgesehene wärmeisolierende Trennwand aufgrund von Energiezufuhr von außen auf der einen Seite gekühlt und auf der anderen Seite erwärmt wird, wobei die Warmseite und die Kaltseite der Trennwand prozeßtechnisch nach Art einer Wärmepumpe oder eines Peltierelementes miteinander verbunden sind, ein Luftstrom auf die wärmeisolierende Trennwand zugeführt und in einen Warmluftstrom und einen Kaltluftstrom aufgeteilt wird, wodurch auf der erwärmten Wandseite ein natürlicher Luftzug aufgrund von Konvektion entsteht, der kaminzugartig kanalisiert wird und zur teilweisen Energierückgewinnung genutzt wird, während auf der gekühlten Seite durch Kondensation von Luftfeuchtigkeit Wasser gewonnen wird, und Warm- und Kaltluftstrom nach Passieren der Trennwand zusammengeführt werden.

2. Verfahren nach Anspruch 1, dadurch gekennzeichnet, daß die teilweise Energierückgewinnung aufgrund des natürlichen Luftzugs mit Hilfe von Turbinen und Generatoren erfolgt.

3. Verfahren nach Anspruch 1 oder 2, dadurch gekennzeichnet, daß neben dem natürlichen Zug aufgrund von Konvektion natürlicher Wind zum Zuführen von Umgebungsluft und zum Gewinnen von Energie genutzt wird.

4. Verfahren nach einem der Ansprüche 1 bis 3, dadurch gekennzeichnet, daß für das Wärmen der einen Seite der Trennwand und das Kühlen der anderen Seite der Trennwand Solarenergie oder Windenergie genutzt wird, die ihrerseits in elektrische Energie umgewandelt wird.

5. Vorrichtung zur Gewinnung von Wasser durch Kondensation von Luftfeuchtigkeit aus der Umgebungsluft, dadurch gekennzeichnet, daß wenigstens eine Trennwand (C1,C2) aus wärmeisolierendem Material zum Abteilen eines Kaltluftraums (III) von einem Warmluftraum (IV,V) vorgesehen ist, diese Trennwand (C1,C2) in einen Kamin (VII) mündet, und die Trennwand (C1,C2) auf der einen Seite mit Heizeinrichtungen und auf der anderen Seite mit Kühleinrichtungen versehen ist, wobei die Warmseite und die Kaltseite der Trennwand prozeßtechnisch nach Art einer Wärmepumpe oder eines Peltierelementes miteinander verbunden sind und wobei die Trennwand (C1,C2) so positioniert und ausgerichtet ist, daß ein auf die wärmeisolierende Trennwand zugeführter Luftstrom in einen Warmluftstrom und einen Kaltluftstrom aufgeteilt wird und Warm- und Kaltluftstrom nach Passieren der Trennwand zusammengeführt werden, wodurch auf der Seite der Heizeinrichtungen ein natürlicher Luftzug aufgrund von Konvektion entsteht, welcher sich in den Kamin (VII) fortsetzt, wodurch der Vorrichtung Umgebungsluft zugeführt wird und in dem Luftzug Turbinen und Generatoren (J1,J2,J3) angeordnet sind, mittels welcher aus der Luftströmung Energie gewonnen wird.

6. Vorrichtung nach Anspruch 5, dadurch gekennzeichnet, daß die Heizeinrichtungen und Kühleinrichtungen gleichermaßen durch Peltier-Elemente (B1,B2) ausgebildet werden, die in wärmedämmende Kunststoff-Doppelstegplatten eingebettet sind, wobei die kühlende Peltier-Element-Seite auf der kühlenden Trennwandseite aus der Kunststoff-Doppelstegplatte herausragt und die wärmende Peltier-Element-Seite auf der wärmenden Trennwandseite aus der Kunststoff-Doppelstegplatte herausragt.

7. Vorrichtung nach Anspruch 5 oder 6, dadurch gekennzeichnet, daß zwei Trennwände (C1,C2) vorgesehen sind, welche jeweils eine Lufteintrittsöffnung in den Warmluftraum (IV,V) und eine Lufteintrittsöffnung in einen Kaltluftraum (III) auf einer Öffnungsseite teilweise umsäumen und die Trennwände (C1,C2) an ihren den Lufteintrittsöffnungen abgewandten Seiten in einen Kamin (VII) münden, in dem Turbinen und Generatoren (J1,J2,J3) zur Energiegewinnung angeordnet sind.

8. Vorrichtung nach Anspruch 7, dadurch gekennzeichnet, daß die Trennwände (C1,C2) nach Art von flexiblen Trennwandzungen ausgebildet und verstellbar sind, so daß die Größenverhältnisse der Größe der Lufteintrittsöffnung in den Kaltluftraum (III) zu der Größe der Lufteintrittsöffnung in den Warmluftraum (IV,V) geändert werden können.

9. Vorrichtung nach Anspruch 7 oder 8, dadurch gekennzeichnet, daß an den Einmündungsstellen der Trennwände (C1,C2) in den Kamin (VII) Turbinen und Generatoren (H1,H2,H3,H4) zur Energiegewinnung angeordnet sind, wobei die Turbinen bei Zuführung von Energie für einen besseren Luftzug auch als Ventilatoren betrieben werden können.

10. Vorrichtung nach einem der Ansprüche 6 bis 9, dadurch gekennzeichnet, daß Solarzellen und/oder Windräder vorgesehen sind, um die elektrische Energie zum Betreiben der Peltier-Elemente (B1,B2) zu gewinnen.

11. Vorrichtung nach einem der Ansprüche 7 bis 10, dadurch gekennzeichnet, daß um den Kamin (VII) herum ein mit Schüttgut (4), beispielsweise Erde, gefüllter Hohlraum ausgebildet ist, wobei sich das Schüttgut (4) als Nährboden für Pflanzen eignet.

12. Vorrichtung nach einem der Ansprüche 5 bis 11, dadurch gekennzeichnet, daß unterhalb der Trennwände (C1,C2) das gewonnene Kondensationswasser auffangende Auffangbehälter (E1; E2) angeordnet sind.

## Claims

1. A method of extracting water from the ambient air by condensation of air moisture, characterised in that a heat-insulating partition being provided for separating a cold air space from a warm air space is cooled on one side and heated on the other side by external supply of energy, the cold side and the warm side of the partition being connected to each other technically in the manner of an heat pump or a Peltier element, an air stream is led to the heat-insulating partition and is separated into a warm air stream and a cold air stream, creating a natural convective air draft on the heated side of the partition, the convective air draft being channelled substantially like a chimney draft and used to recover part of the energy while water is extracted on the cooled side by condensation of air moisture, and the warm air stream and the cold air stream are being reunified after passing the partition.

2. The method according to claim 1, characterised in that the partial recovery of energy by said natural air draft is achieved through turbines and generators.

3. The method according to claim 1 or 2, characterised in that natural wind is used in addition to the natural convective air draft to supply ambient air and to produce energy.

4. The method according to any one of claims 1 to 3, characterised in that solar energy or wind energy converted into electrical energy is used for the heating of the one side of the partition and for the cooling of the other side of the partition.

5. An apparatus for extracting water from the ambient air by condensation of air moisture, characterised in that at least one partition (C1, C2) made of a heat-insulating material is provided for separating a cold air space (III) from a warm air space (IV, V), said partition (C1, C2) leading into a chimney (VII) and being provided with heating means on one side of the partition (C1, C2) and with cooling means on the other side of the partition (C1, C2), the cold side and the warm side of the partition being connected to each other technically in the manner of an heat pump or a Peltier element and said partition (C1, C2) being positioned and oriented such that an air stream, led to the heat-insulating partition, is separated into a warm air stream and a cold air stream and the warm air stream and the cold air stream are being reunified after passing the partition, whereby a natural convective air draft is created on the side of the heating means, extending into the chimney (VII) thus causing ambient air to be supplied to the apparatus, turbines and generators (J1, J2, J3) being arranged in the air draft for producing energy from the air flow.

6. The apparatus according to claim 5, characterised in that the heating means as well as the cooling means are formed by Peltier elements (B1, B2) embedded in heat-insulating, compartmentalised double-plates made of a plastics material, the cooling end of each Peltier element projecting from the associated double-plate on the cooling side of the partition, and the heating end of each Peltier element projecting from the associated double-plate on the heating side of the partition.

7. The apparatus according to claim 5 or 6, characterised in that two partitions (C1, C2) are provided and each partition partly confines an intake air opening towards the warm air space (IV, V) and an intake air opening towards the cold air space (III) on one side of each opening, and that the ends of the partitions (C1, C2) opposite to the intake air openings lead into a chimney (VII) in which turbines and generators (J1, J2, J3) are arranged for producing energy.

8. The apparatus according to claim 7, characterised in that the partitions (C1, C2) are formed as flexible and adjustable partition tongues allowing to modify the proportion of the size of the intake air opening towards the cold air space (III) with respect to the size of the intake air opening towards the warm air space (IV, V).

9. The apparatus according to claim 7 or 8, characterised in that turbines and generators (H1, H2, H3, H4) for producing energy are arranged at the places where the partitions (C1, C2) extend into the chimney (VII), wherein the turbines when energised can also be operated as fans for improving the air draft.

10. The apparatus according to any one of claims 6 to 9, characterised in that solar cells and/or wind wheels are provided to produce the electrical energy for operating the Peltier elements (B1, B2).

11. The apparatus according to any one of claims 7 to 10, characterised in that around the chimney (VII) a cavity is provided filled with bulk material (4), for instance earth, suitable as a nutritive substrate for plants.

12. The apparatus according to any one of claims 5 to 11, characterised in that collecting containers (E1; E2) for collecting the extracted condensation water are arranged beneath the partitions (C1, C2).

## Revendications

1. Procédé pour l'extraction de l'eau de l'air ambiant par condensation de l'humidité atmosphérique, caractérisé en ce qu'une paroi calorifuge de séparation prévue pour la séparation d'une chambre d'air froid d'une chambre d'air chaud est chauffée d'un côté et refroidie de l'autre par apport de l'énergie de l'extérieur, le côté chauffé et le côté froid de la paroi de séparation étant reliés l'un à l'autre d'un point de vue technique de process à la manière d'une pompe de chaleur ou d'un élément Peltier, un écoulement d'air étant amené à la paroi calorifuge de séparation et étant divisé en un écoulement d'air chaud et en un écoulement d'air froid par lesquels du côté chauffé de la paroi, se forme un courant d'air naturel du fait de la convection qui est canalisé à la manière d'un courant d'une cheminée et est utilisé pour la récupération partielle d'énergie, pendant que sur le côté refroidi, de l'eau est obtenue par condensation de l'humidité atmosphérique, les écoulements d'air chaud et froid étant reconduits ensemble après le passage de la paroi de séparation.

2. Procédé selon la revendication 1, caractérisé en ce que la récupération partielle de l'énergie, à l'aide du courant d'air naturel s'effectue au moyen de turbines et de générateurs.

3. Procédé selon la revendication 1 ou 2, caractérisé en ce qu'à côté du courant naturel du fait de la convection, du vent naturel pour amener de l'air ambiant est utilisé pour récupérer de l'énergie.

4. Procédé selon l'une quelconque des revendications 1 à 3, caractérisé en ce que, pour l'échauffement de l'un des côtés de la paroi de séparation et du refroidissement de l'autre côté de la paroi de séparation, on utilise de l'énergie solaire ou de l'énergie éolienne qui, de leur côté, sont transformées en énergie électrique.

5. Dispositif pour l'extraction de l'eau de l'air ambiant par condensation de l'humidité atmosphérique, caractérisé en ce qu'au moins une paroi de séparation (C1, C2) réalisée en un matériau calorifuge, est prévue pour séparer une chambre d'air froid (III) d'une chambre (IV, V) d'air chaud, cette paroi de séparation (C1, C2) débouchant dans une cheminée (VII) et étant munie d'un côté de dispositifs de chauffage et de l'autre côté de dispositifs de refroidissement, le côté chaud et le côté froid de la paroi de séparation étant relié d'un point de vue technique de process à la manière d'une pompe de chaleur ou d'un élément Peltier, la paroi de séparation (C1, C2) étant positionnée et orientée de telle sorte qu'un écoulement d'air amené sur la paroi calorifuge de séparation est divisé en un écoulement d'air chaud et un écoulement d'air froid et les écoulements d'air chaud et d'air froid sont reconduits ensemble après le passage de la paroi de séparation, de sorte que sur le côté des dispositifs de chauffage, on obtient un courant d'air naturel du fait de la convection, qui se poursuit dans la cheminée (VII) de sorte que l'air ambiant est amené au dispositif, et des turbines et des générateurs (J1, J2, J3) sont agencés dans l'écoulement d'air au moyen desquels à partir de l'écoulement d'air, on récupère de l'énergie.

6. Dispositif selon la revendication 5, caractérisé en ce que les dispositifs de chauffage et les dispositifs de refroidissement sont réalisés de façon identique par des éléments Peltier (B1, B2) qui sont encastrés dans des panneaux calorifiques à barrette double en matière plastique, le côté refroidissant de l'élément Peltier faisant saillie du côté refroidissant de la paroi de séparation du panneau à barrette double en matière plastique et le côté chauffant de l'élément Peltier faisant saillie du côté chauffant de la paroi de séparation du panneau à barrette double en matière plastique.

7. Dispositif selon la revendication 5 ou 6, caractérisé en ce que deux parois de séparation (C1, C2) sont prévues, qui respectivement entourent partiellement une ouverture d'entrée d'air dans la chambre d'air chaud (IV,V) et une ouverture d'entrée d'air dans la chambre d'air froid (III), sur un côté d'ouverture, les parois de séparation (C1, C2) débouchent sur leurs côtés opposés aux ouvertures d'entrée d'air dans une cheminée (VII) dans laquelle sont agencés des turbines et des générateurs (J1, J2, J3) pour la récupération d'énergie.

8. Dispositif selon la revendication 7, caractérisée en ce que les parois de séparation (C1, C2) sont réalisées à la manière de languettes flexibles de paroi de séparation et sont réglables de sorte que le rapport entre la taille de l'ouverture d'entrée d'air dans la chambre (III) d'air froid et la taille d'ouverture d'entrée d'air chaud (IV,V) peut être varié.

9. Dispositif selon la revendication 7 ou 8, caractérisé en ce qu'aux emplacements d'embouchure des parois de séparation (C1,C2) dans la cheminée (VII) sont agencés des turbines et générateurs (H1, H2, H3, H4) pour la récupération d'énergie, les turbines pouvant fonctionner lors de l'amenée de l'énergie en tant que ventilateur pour un meilleur courant d'air.

10. Dispositif selon l'une quelconque des revendications 6 à 9, caractérisé en ce que des cellules solaires et'ou des hélices éoliennes sont prévues pour produire de l'énergie électrique pour faire fonctionner les éléments Peltier (B1, B2) pour des plantes.

11. Dispositif selon l'une quelconque des revendications 7 à 10, caractérisé en ce qu'une cavité remplie avec un produit en vrac (4), par exemple de la terre, est réalisée autour de la cheminée (VII), le produit en vrac (4) étant adapté en tant que couche nourricière.

12. Dispositif selon l'une quelconque des revendications 5 à 11, caractérisé en ce qu'en dessous des parois de séparation (C1, C2), un récipient (E1 ; E2) de récupération de l'eau de condensation récupérée est agencé.
